# EUROPEAN PATENT SPECIFICATION

(11) **EP 4 549 169 B1**
(45) Date of publication and mention of the grant of the patent: **23.09.2026**
(21) Application number: 24208265.9
(22) Date of filing: 23.10.2024
(51) Int. Cl.: B60B 31/00, B60B 31/02, B60B 1/00, B60B 1/02

(54) **A SPOKE POSITIONING AND PLACEMENT APPARATUS AND METHOD FOR POSITIONING AND PLACEMENT OF A SPOKE INTO A RIM OF A BICYCLE WHEEL**
SPEICHENPOSITIONIERUNGS- UND -PLATZIERUNGSVORRICHTUNG UND VERFAHREN ZUR POSITIONIERUNG UND PLATZIERUNG EINER SPEICHE IN EINER FELGE EINES FAHRRADRADES
APPAREIL DE POSITIONNEMENT ET DE PLACEMENT DE RAYON ET PROCÉDÉ DE POSITIONNEMENT ET DE PLACEMENT D'UN RAYON DANS UNE JANTE D'UNE ROUE DE BICYCLETTE

(30) Priority: 01.11.2023 NL 2036165
(43) Date of publication of application: 07.05.2025
(73) Proprietor: Holland Mechanics B.V., 1442 PZ Purmerend (NL)
(72) Inventor: VAN BRUMMELEN, Marinus Johannes, Purmerend (NL)
(74) Representative: van Breda, Jacobus

(56) References cited:
- WO-A2-2007/040386
- US-A- 4 799 304
- US-A- 5 193 599
- US-A- 5 301 731

## Description

The invention relates to a spoke positioning and placement apparatus, comprising a rim handling device for handling a rim of a bicycle wheel, and a spoke handling device for handling a spoke, which rim handling device and spoke handling device are arranged to execute a concerted operation for positioning a spoke or spokes with reference to the rim, wherein the spoke handling device is arranged to engage and bent a spoke which is on a first side attached to an upper flange or a bottom flange of a hub of the bicycle wheel, and to subsequently position an end portion of the spoke opposite to the first side which is attached to the upper flange or the bottom flange of the hub of the bicycle wheel, in front of a selected spoke hole in the rim, and to relax the spoke and position said end portion of the spoke into the selected spoke hole of the rim.

WO2007/040386 discloses such a spoke positioning and placement apparatus.

US 5,193,599 discloses an apparatus for mounting spokes between a hub and rim of a spoke wheel, wherein the apparatus holds the rim in a horizontal plane and comprises a hub support for rotatably supporting the hub. The hub support is vertically movable for supporting the hub at a desired height with reference to the rim.

It is an object of the invention to provide a spoke positioning and placement apparatus which enables a complete and automatic yet accurate assembly of a spoke, or multiple spokes at a time, to a rim of a bicycle wheel.

The apparatus known from WO2007/040386 is disadvantageous in that it merely enables to place a single spoke at a time, although the document mentions that there are several spoke grippers, however without providing an enabling disclosure how these multiple spoke grippers may operate to make the placement of several spokes at a time possible.

Primarily it is an object of the invention to provide an apparatus in which the assembly of a spoked wheel can be realized easily, quickly and reliably.

According to the invention a spoke positioning and placement apparatus is proposed having the features of one or more of the appended claims.

In the apparatus of the invention the vertically movable hub support is arranged to move the hub to a height that depends on whether the spoke that is handled by the spoke handling device connects to the upper flange or to the bottom flange of the hub. This provides the possibility to optimally position the hub during the spoke placement procedure and present the spokes to the spoke handling device so that this device may handle the spoke at an optimal angle for placement in a selected spoke hole of the rim.

Preferably the vertically movable hub support is arranged to keep the spoke that is handled by the spoke handling device and that connects to the upper flange or to the bottom flange of the hub, essentially below (the horizontal plane through) the rim.

In particular it is preferable that the vertically movable hub support is arranged to maneuver the hub to a height in which the upper flange is below the rim in case the spoke handling device handles a spoke which is connected to the upper flange of the hub. Conversely it is preferable that the vertically movable hub support is arranged to maneuver the hub to a height in which the upper flange is above the rim in case the spoke handling device handles a spoke which is connected to the bottom flange of the hub.

In a preferable embodiment the spoke handling device is equipped with a sensor, said spoke handling device further being equipped with a spoke gripper to engage the spoke, wherein during use the spoke gripper is actuated based on signals received from the sensor. The sensor can be embodied in a foot pedal that is actuated by an operator when the spoke is in the correct position. Preferably however the sensor serves to detect the spoke without human intervention, so as to enable a complete automation avoiding all human assistance during the operation of the apparatus. The manner in which this can be implemented is for instance by using a PLC (programmable logic controller) that receives the signals from the sensor and converts the signals into driving signals for the spoke gripper.

Suitably at least a part of the spoke handling device, preferably the spoke gripper, is movable for bending the spoke that is gripped by the spoke gripper. There are indeed several options to automatically bend the spoke, one of which is to move the complete spoke handling device, but it is more elegant and enables a quicker operation to only have to move the spoke gripper which has engaged the spoke. It is clear for the skilled person that the movement of the spoke handling device, or the spoke gripper, can be realized in very differing embodiments, to note by using for instance electrical actuators or hydraulic actuators or pneumatic actuators.

It is further preferable that the spoke handling device is mounted on a carriage which is movable along a guide. This enables switching the position/orientation of the spoke handling device to accommodate to different spokes, respectively connected to opposite flanges of the hub.

Suitably further at least a part of the spoke handling device, preferably the spoke gripper, is movable for moving an end portion of a bended spoke in front of and in-line with a selected spoke hole of the rim.

It is further preferred that the spoke handling device, preferably the spoke gripper, is movable for relaxing the bended spoke and moving said end portion of the spoke being relaxed into and through the selected spoke hole of the rim.

Beneficially the apparatus of the invention comprises at least one screwdriver for screwing a nipple onto a selected spoke placed into and through the selected spoke hole of the rim so as to fasten the spoke to the rim.

In a preferred embodiment the apparatus of the invention comprises multiple spoke handling devices and correspondingly multiple screwdrivers for placement of nipples on spokes. Since the involvement of an operator is excluded with the apparatus of the invention, this opens the way to a further increased speed of operation utilizing multiple spoke handling devices and corresponding screwdrivers.

As already mentioned the invention is also embodied in a method to position and place a spoke or spokes with reference to a rim of a bicycle wheel. In the method of the invention, the following steps are carried out:
- positioning the rim horizontally,
- engaging and bending a spoke which spoke is on a first side attached to an upper flange or a bottom flange of a hub of the bicycle wheel,
- positioning the hub at a height wherein the upper flange of the hub is below the rim in case the spoke is connected to the upper flange of the hub, or
- positioning the hub at a height wherein the upper flange of the hub is above the rim in case the spoke is connected to the bottom flange of the hub,
- positioning an end portion of the spoke opposite to the first side of the spoke that is attached to the hub of the bicycle wheel, in front of a selected spoke hole in the rim,
- relaxing the spoke and positioning said end portion of the spoke into and through the selected spoke hole of the **rim.**

The spoke is then suitably placed in position enabling a completing operation by screwing a nipple on the spoke which is placed into and through the selected spoke hole of the **rim.**

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- - figures 1a-1c: show an apparatus of the invention in an isometric view, plan view and side view, respectively, when operating on a spoke that is connected to an upper flange of a hub of a spoke wheel;
- - figures 2a-2c: show the apparatus of the invention in an isometric view, plan view and side view, respectively, when operating on a spoke that is connected to a bottom flange of a hub of a spoke wheel;
- - figure 3a: shows in a side view an operational step of the apparatus of the invention, in which a gripper engages a detected spoke;
- - figures 3b: shows in a side view an operational step of the apparatus of the invention, in which the gripper is in an intermediate phase of bending the engaged spoke;
- - figures 3c: shows in a side view that the gripper has inserted the engaged spoke into and through a spoke hole in the rim of a bicycle wheel, and a screwdriver screws a nipple onto the spoke which is inserted and placed through the spoke hole in the rim of a bicycle wheel.

Whenever in the figures the same reference numerals are applied, these numerals refer to the same parts.

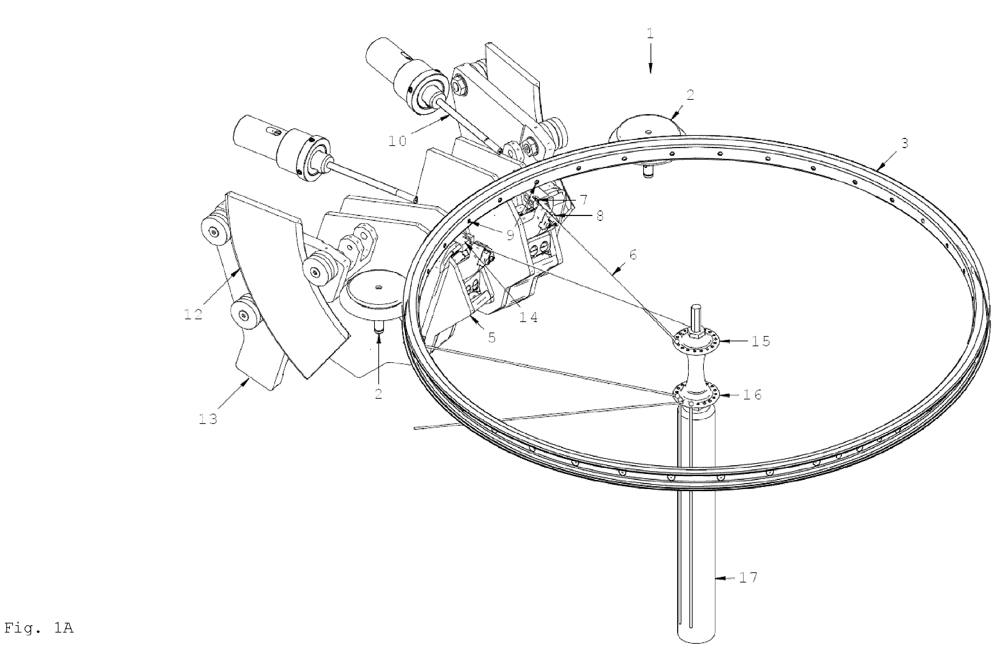

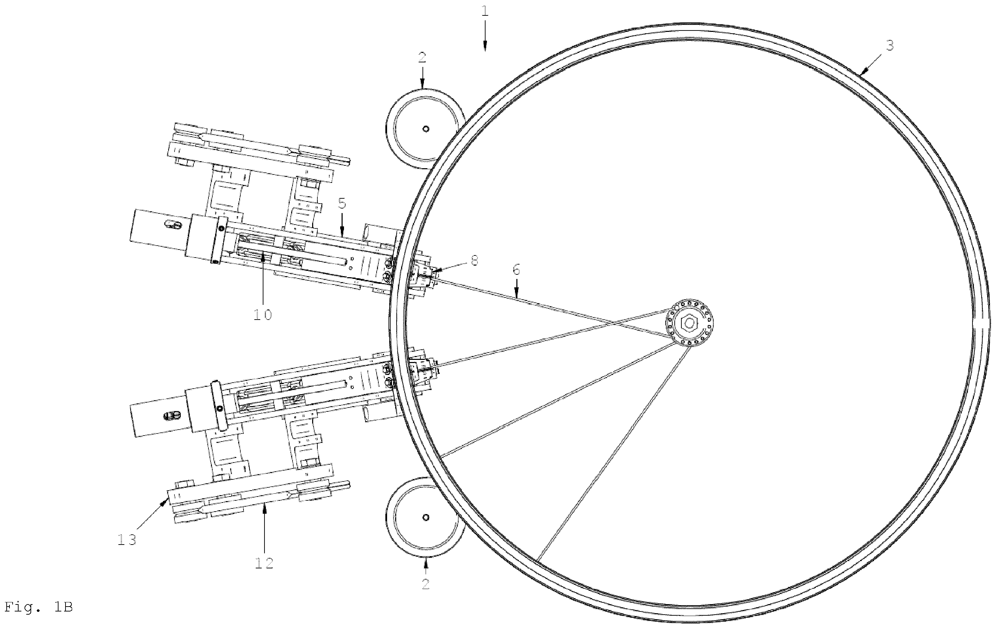

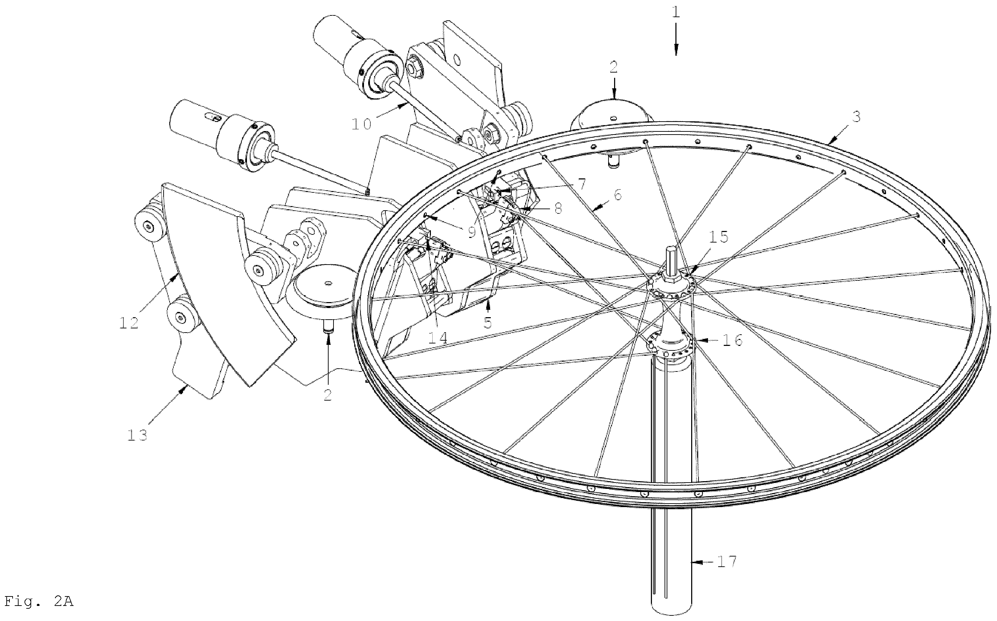

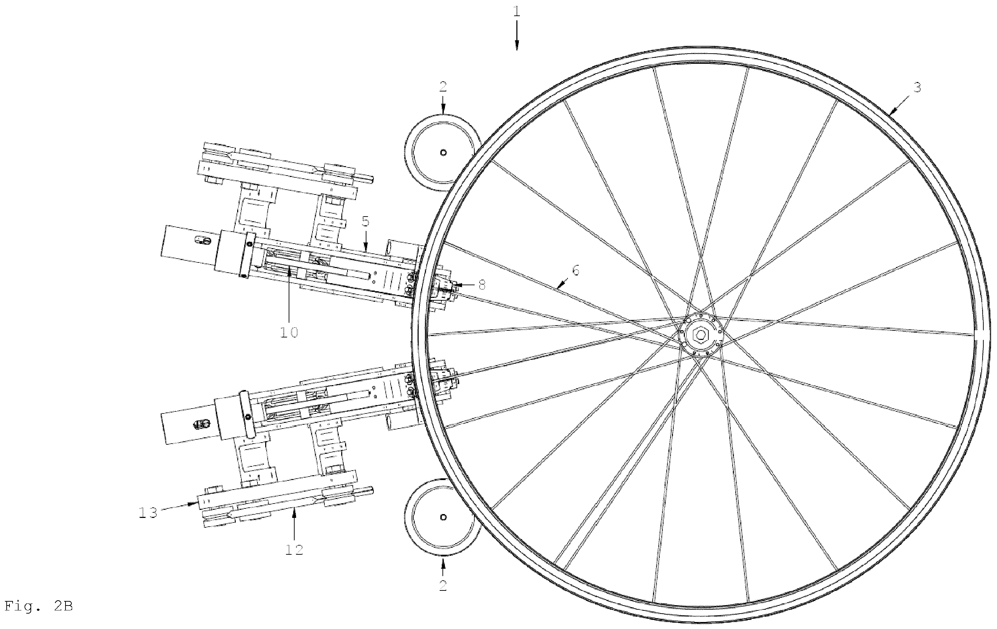

Referring to figures 1a-1c and figures 2a-2c, it shows a spoke positioning and placement apparatus 1, comprising a rim handling device 2 arranged for handling a rim 3 of a bicycle wheel **4.** The embodiment that is shown in the figures is provided with two spoke handling devices 5, each spoke handling device 5 being equipped for handling a spoke **6.** It is also possible that there is only a single spoke handling device 5, or more than two spoke handling devices **5.**

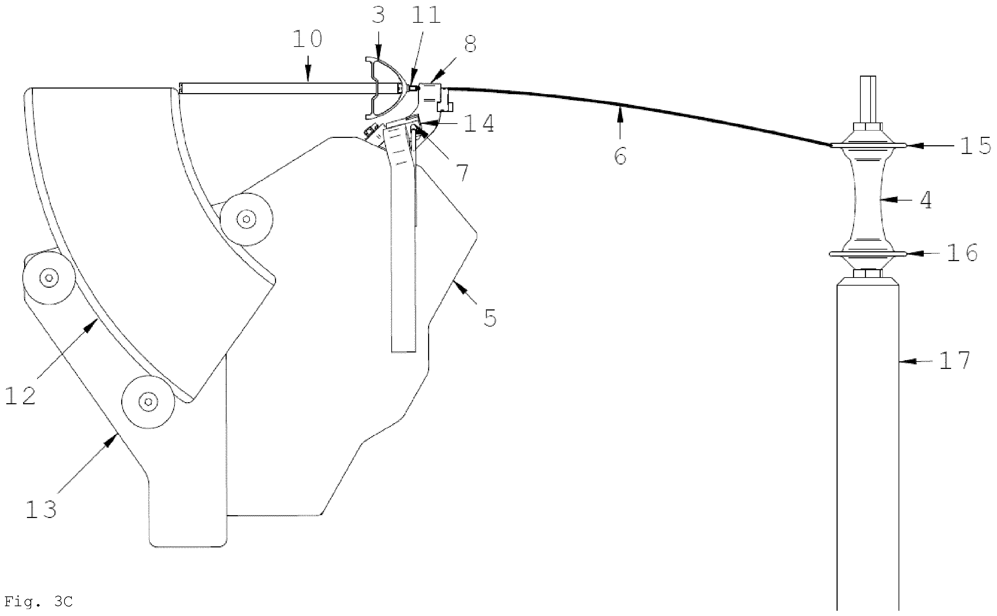

Figures 1a-1c and 2a-2c further show that the apparatus 1 comprises two screwdrivers 10 to match the number of spoke handling devices **5.** It is also possible to have only a single screwdriver 10 for screwing a nipple 11 (see figure 3c) onto a selected spoke 6 placed into and through a selected spoke hole 9 of the rim 3 so as to fasten the spoke 6 to the rim **3. As** mentioned: in the shown embodiment the apparatus 1 comprises multiple spoke handling devices 5 and correspondingly multiple screwdrivers 10 for placement of nipples on spokes 6.

The difference between figures 1a-1c and figures 2a-2c is that in figures 1a-1c the spoke 6 to be handled is connected to the upper flange 15 of the hub 4, whereas in figures 2a-2c the spoke 6 to be handled is connected to the bottom flange 16 of the hub **4.** In connection therewith the apparatus 1 is provided with the feature of a vertically movable hub support 17 for supporting the hub 4 at a desired height with reference to the rim **3.**

A comparison of figures 1a-1c with figures 2a-2c makes clear that the vertically movable hub support 17 is arranged to move the hub 4 to a height that depends on whether the spoke 6 that is handled by the spoke handling device 5 connects to the upper flange 15 or to the bottom flange 16 of the hub 4. In all situations however the vertically movable hub support 17 is arranged to keep the spoke 6 that is handled by the spoke handling device 5 and that connects to the upper flange 15 or to the bottom flange 16 of the hub 4, essentially below the rim 3.

Figures 1a-1c show that the vertically movable hub support 17 is arranged to maneuver the hub 4 to a height in which the upper flange 15 is below the rim 3 in case the spoke handling device 5 handles a spoke 6 which is connected to the upper flange 15 of the hub 4 - see the relative position of the movable hub support 17 vis-a-vis reference line 18.

Conversely figures 2a-2c show that the vertically movable hub support 17 is arranged to maneuver the hub 4 to a height in which the upper flange 15 is above the rim 3 in case the spoke handling device 5 handles a spoke 6 which is connected to the bottom flange 16 of the hub 4 - compare again the position of the movable hub support 17 with reference line 18.

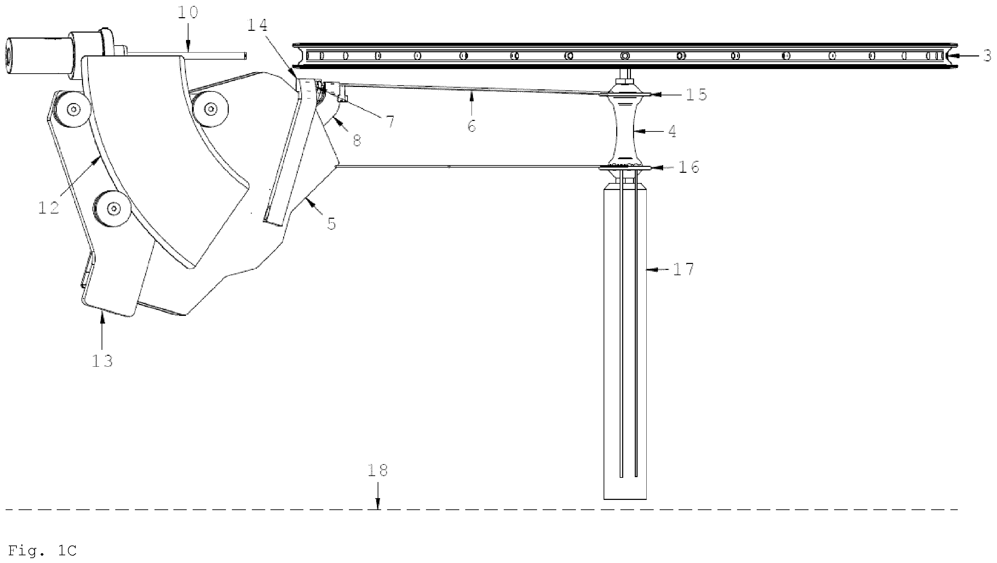

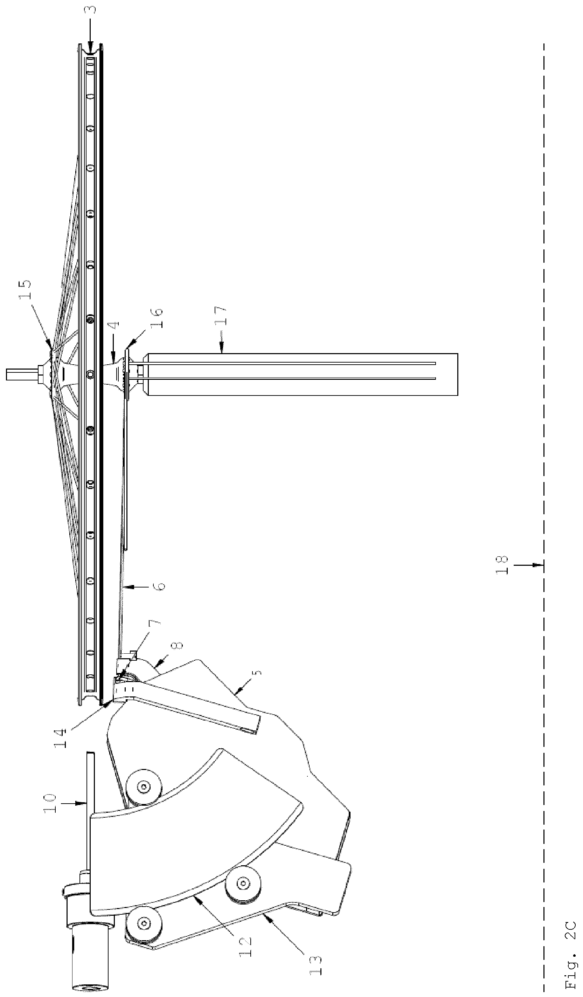

Figures 1a-1c and 2a-2c further show that the spoke handling device 5 is mounted on a carriage 13 which is movable along a guide 12. This arrangement serves to switch the position/orientation of the spoke handling device 5 to accommodate to different spokes 6, respectively connected to the opposite flanges 15, 16 of the hub 4. Figure 1c shows that the spoke handling device 5 engages the spoke 6 that attaches to the upper flange 15 of the hub 4, whilst figure 2c shows that the spoke handling device 5 engages the spoke 6 that attaches to the lower flange 16 of the hub 4.

The rim handling device 2 and each spoke handling device 5 are arranged to execute a concerted operation as detailed hereinafter for positioning a spoke or spokes 6 with reference to the rim 3.

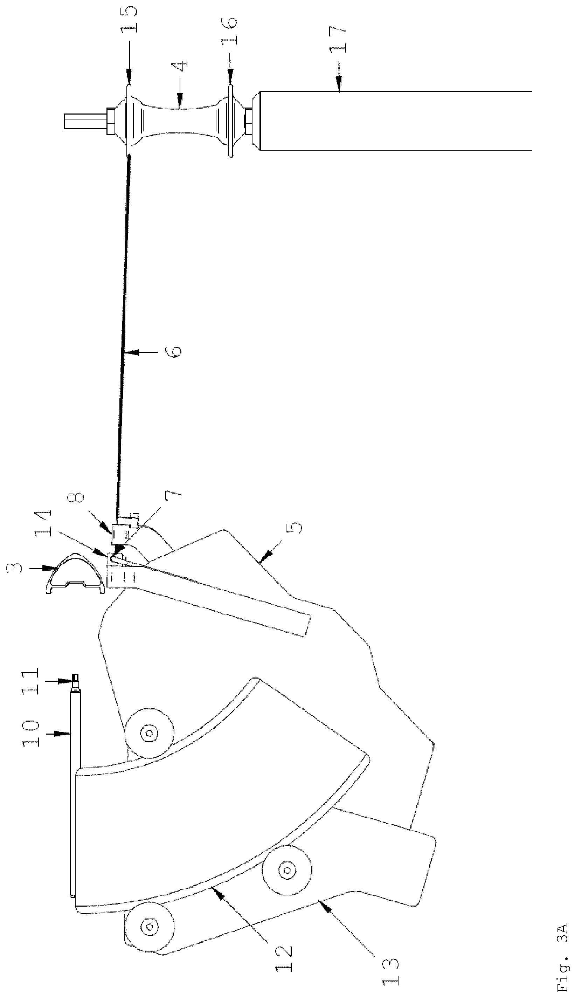

The spoke handling device 5 is arranged to engage a spoke 6 as depicted in figure 3a. The spoke 6 is at a first side attached to a hub 4 of the bicycle wheel, which is also necessary to make a bending operation on the spoke 6 possible.

Figure 3a but also figures 1a-1c and 2a-2c depict further that the spoke handling device 5 is equipped with a sensor 7. As shown in figures 1a and 2a the sensor 7 is embodied within a spoke catcher 14 so as to automatically detect the spoke, but the sensor could also be embodied in other ways, for instance in a foot pedal which can be actuated by an operator. Figures 1a-1c and 2a-2c further show that the spoke handling device 5 is equipped with a spoke gripper 8 which serves to engage the spoke 6, and wherein during use the spoke gripper 8 is actuated based on signals received from the sensor 7.

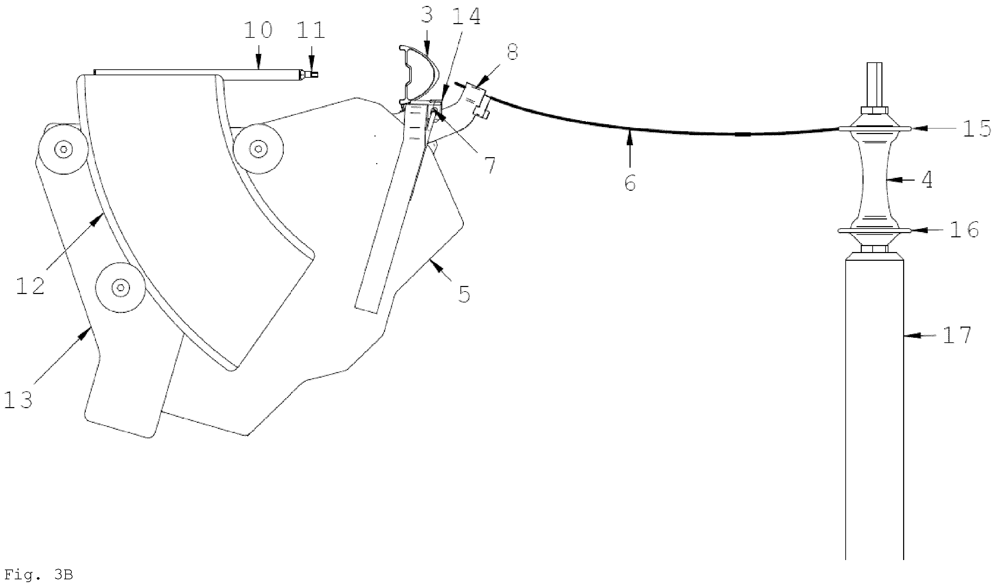

Figure 3b depicts that at least a part of the spoke handling device 5, preferably the spoke gripper 8, is movable for bending the spoke 6 after it is gripped by the spoke gripper 8. This is illustrated by comparing figures 3a (no bending) with figure 3b (intermediate bending).

After the spoke gripper 8 has engaged and bent the spoke 6, the next action is to position an end portion 6' of the spoke 6 which is opposite to the first side that is attached to (in this case: the upper flange 15 of) the hub 4 of the bicycle wheel, in front of a selected spoke-hole 9 in the rim 3, as shown in figure 3c.

After the end portion 6' of the spoke 6 is positioned in front of a selected spoke hole 9 in the rim 3, the spoke 6 can be relaxed to position said end portion 6' of the spoke 6 into and through the selected spoke hole 9 of the rim 3. Accordingly at least a part of the spoke handling device 5, preferably the spoke gripper 8, is movable both for moving the end portion 6' of the bended spoke 6 in front of and in-line with a selected spoke hole 9 of the rim 3, and for relaxing the bended spoke 6 and moving said end portion 6' of the spoke 6 being relaxed into and through the selected spoke hole 9 of the rim 3, as is illustrated in figure 3c.

Figure 3c finally shows the operation of the screwdriver 10 which screws a nipple 11 on the spoke 6 which is placed into and through the selected spoke hole 9 of the rim 3.

Although the invention has been discussed in the foregoing with reference to an exemplary embodiment of the invention, the invention is not restricted to this particular embodiment which can be varied in many ways. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications. Unless specifically stated as being "essential" above, none of the various components or the interrelationship thereof are essential to the operation of the invention.

Optionally, embodiments of the present invention can include a general or specific purpose computer or distributed system programmed with computer software implementing method steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations.

## Claims

1. A spoke positioning and placement apparatus (1), comprising a rim handling device (2) for handling a rim (3) of a bicycle wheel (4), and a spoke handling device (5) for handling a spoke (6), which rim handling device (2) and spoke handling device (5) are arranged to execute a concerted operation for positioning a spoke (6) or spokes with reference to the rim (3), wherein the spoke handling device (5) is arranged to engage and bent a spoke (6) which is on a first side attached to an upper flange (15) or a bottom flange (16) of a hub (4) of the bicycle wheel, and to subsequently position an end portion (6') of the spoke (6) opposite to the first side which is attached to the upper flange (15) or the bottom flange (16) of the hub of the bicycle wheel, in front of a selected spoke hole (9) in the rim (3), and to relax the spoke (6) and position said end portion (6') of the spoke (6) into the selected spoke hole (9) of the rim (3), **characterized in that** the apparatus (1) is arranged to hold the rim (3) in a horizontal plane, and the apparatus comprises a vertically movable hub support (17) for supporting the hub (4) at a desired height with reference to the rim (3), wherein the vertically movable hub support (17) is arranged tc move the hub (4) to a height that depends on whether the spoke (6) that is handled by the spoke handling device (5) connects to the upper flange (15) or to the bottom flange (16) of the hub (4).

2. The spoke positioning and placement apparatus according to claim 1, **characterized in that** the vertically movable hub support (17) is arranged to keep the spoke (6) that is handled by the spoke handling device (5) and that connects to the upper flange (15) or to the bottom flange (16) of the hub (4), essentially below the horizontal plane through the rim (3).

3. The spoke positioning and placement apparatus according to any one of claims 1-2, **characterized in that** the vertically movable hub support (17) is arranged to maneuver the hub (4) to a height in which the upper flange (15) is below the rim (3) in case the spoke handling device (5) handles a spoke (6) which is connected to the upper flange (15) of the hub (4).

4. The spoke positioning and placement apparatus according to any one of claims 1-3, **characterized in that** the vertically movable hub support (17) is arranged to maneuver the hub (4) to a height in which the upper flange (15) is above the rim (3) in case the spoke handling device (5) handles a spoke (6) which is connected to the bottom flange (16) of the hub (4).

5. The spoke positioning and placement apparatus according to any one of claims 1-4, **characterized in that** the spoke handling device (5) is equipped with a sensor (7), said spoke handling device (5) further being equipped with a spoke gripper (8) to engage the spoke (6), wherein during use the spoke gripper (8) is actuated based on signals received from the sensor (7).

6. The spoke positioning and placement apparatus of any one of claims 1-5, **characterized in that** at least a part of the spoke handling device (5), preferably the spoke gripper (8), is movable for bending the spoke (6) that is gripped by the spoke gripper (8).

7. The spoke positioning and placement apparatus of any one of claims 1-6, **characterized in that** at least a part of the spoke handling device (5), preferably the spoke gripper (8), is movable for moving an end portion (6') of a bended spoke (6) in front of and in-line with a selected spoke hole (9) of the rim (3).

8. The spoke positioning and placement apparatus of claim 7, **characterized in that** the spoke handling device (5), preferably the spoke gripper (8), is movable for relaxing the bended spoke (6) and moving said end portion (6') of the spoke (6) being relaxed into and through the selected spoke hole (9) of the rim (3).

9. The spoke positioning and placement apparatus of any one of claims 1-8, **characterized in that** the spoke handling device (5) is mounted on a carriage (13) which is movable along a guide (12).

10. The spoke positioning and placement apparatus according to the preamble of claim 1 or according to any one of claims 1-9, **characterized in that** the apparatus (1) comprises at least one screwdriver (10) for screwing a nipple (11) onto a selected spoke (6) placed into and through the selected spoke hole (9) of the rim (3) so as to fasten the spoke (6) to the rim (3).

11. The spoke positioning and placement apparatus according to any one of claims 1-10, **characterized in that** the apparatus (1) comprises multiple spoke handling devices (5) and correspondingly multiple screwdrivers (10) for placement of nipples (11) on spokes (6).

12. Method to position and place a spoke (6) or spokes with reference to a rim (3) of a bicycle wheel (4), **characterized by** the steps of
- positioning the rim (3) horizontally,
- engaging and bending a spoke (6) which spoke is on a first side attached to an upper flange (15) or a bottom flange (16) of a hub (4) of the bicycle wheel,
- positioning the hub (4) at a height wherein the upper flange (15) of the hub (4) is below the rim (3) in case the spoke (6) is connected to the upper flange (15) of the hub (4), or
- positioning the hub (4) at a height wherein the upper flange (15) of the hub (4) is above the rim (3) in case the spoke (6) is connected to the bottom flange (16) of the hub (4),
- positioning an end portion (6') of the spoke (6) opposite to the first side of the spoke (6) that is attached to the hub (4) of the bicycle wheel, in front of a selected spoke hole (9) in the rim (3),
- relaxing the spoke (6) and positioning said end portion (6') of the spoke (6) into and through the selected spoke hole (9) of the rim (3).

13. Method according to claim 12, **characterized by** screwing a nipple (11) on the spoke (6) which is placed into and through the selected spoke hole (9) of the rim (3).

## Patentansprüche

1. Speichenpositionierungs- und -platzierungsvorrichtung (1), umfassend eine Felgenhandhabungsvorrichtung (2) zum Handhaben einer Felge (3) eines Fahrradrades (4), und eine Speichenhandhabungsvorrichtung (5) zum Handhaben einer Speiche (6), wobei die Felgenhandhabungsvorrichtung (2) und die Speichenhandhabungsvorrichtung (5) dazu angeordnet sind, einen gemeinsamen Vorgang zum Positionieren einer Speiche (6) oder von Speichen in Bezug auf die Felge (3) auszuführen, wobei die Speichenhandhabungsvorrichtung (5) dazu angeordnet ist, an der Speiche (6), die auf einer ersten Seite an einem oberen Flansch (15) oder einem unteren Flansch (16) einer Nabe (4) des Fahrradrades befestigt ist, anzugreifen und diese zu biegen, und anschließend einen Endabschnitt (6') der Speiche (6) gegenüber der ersten Seite, die am oberen Flansch (15) oder am unteren Flansch (16) der Nabe des Fahrradrades befestigt ist, vor einem ausgewählten Speichenloch (9) in der Felge (3) zu positionieren und die Speiche (6) zu entspannen und den genannten Endabschnitt (6') der Speiche (6) in dem ausgewählten Speichenloch (9) der Felge (3) zu platzieren, **dadurch gekennzeichnet, dass** die Vorrichtung (1) dazu angeordnet ist, die Felge (3) in einer horizontalen Ebene zu halten, und die Vorrichtung eine vertikal bewegliche Nabenhalterung (17) zum Tragen der Nabe (4) auf einer gewünschten Höhe in Bezug auf die Felge (3) umfasst, wobei die vertikal bewegliche Nabenhalterung (17) dazu angeordnet ist, die Nabe (4) auf eine Höhe zu bewegen, die davon abhängt, ob die Speiche (6), die von der Speichenhandhabungsvorrichtung (5) gehandhabt wird, mit dem oberen Flansch (15) oder mit dem unteren Flansch (16) der Nabe (4) verbunden ist.

2. Speichenpositionierungs- und -platzierungsvorrichtung nach Anspruch 1, **dadurch gekennzeichnet, dass** die vertikal bewegliche Nabenhalterung (17) dazu angeordnet ist, die Speiche (6), die von der Speichenhandhabungsvorrichtung (5) gehandhabt wird und die mit dem oberen Flansch (15) oder mit dem unteren Flansch (16) der Nabe (4) verbunden ist, im Wesentlichen unterhalb der horizontalen Ebene durch die Felge (3) zu halten.

3. Speichenpositionierungs- und -platzierungsvorrichtung nach einem der Ansprüche 1 bis 2, **dadurch gekennzeichnet, dass** die vertikal bewegliche Nabenhalterung (17) dazu angeordnet ist, die Nabe (4) auf eine Höhe zu bewegen, bei der sich der obere Flansch (15) unterhalb der Felge (3) befindet, falls die Speichenhandhabungsvorrichtung (5) eine Speiche (6) handhabt, die mit dem oberen Flansch (15) der Nabe (4) verbunden ist.

4. Speichenpositionierungs- und -platzierungsvorrichtung nach einem der Ansprüche 1 bis 3, **dadurch gekennzeichnet, dass** die vertikal bewegliche Nabenhalterung (17) dazu angeordnet ist, die Nabe (4) auf eine Höhe zu bewegen, bei der sich der obere Flansch (15) oberhalb der Felge (3) befindet, falls die Speichenhandhabungsvorrichtung (5) eine Speiche (6) handhabt, die mit dem unteren Flansch (16) der Nabe (4) verbunden ist.

5. Speichenpositionierungs- und -platzierungsvorrichtung nach einem der Ansprüche 1 bis 4, **dadurch gekennzeichnet, dass** die Speichenhandhabungsvorrichtung (5) mit einem Sensor (7) ausgestattet ist, wobei die genannte Speichenhandhabungsvorrichtung (5) ferner mit einem Speichengreifer (8) zum Angreifen an der Speiche (6) ausgestattet ist, wobei der Speichengreifer (8) basierend auf Signalen, die von dem Sensor (7) empfangen werden, während des Gebrauchs betätigt wird.

6. Speichenpositionierungs- und -platzierungsvorrichtung nach einem der Ansprüche 1 bis 5, **dadurch gekennzeichnet, dass** zumindest ein Teil der Speichenhandhabungsvorrichtung (5), vorzugsweise der Speichengreifer (8), beweglich ist, um die von dem Speichengreifer (8) ergriffene Speiche (6) zu biegen.

7. Speichenpositionierungs- und -platzierungsvorrichtung nach einem der Ansprüche 1 bis 6, **dadurch gekennzeichnet, dass** zumindest ein Teil der Speichenhandhabungsvorrichtung (5), vorzugsweise der Speichengreifer (8), beweglich ist, um einen Endabschnitt (6') einer gebogenen Speiche (6) vor und in einer Linie mit einem ausgewählten Speichenloch (9) der Felge (3) zu bewegen.

8. Speichenpositionierungs- und -platzierungsvorrichtung nach Anspruch 7, **dadurch gekennzeichnet, dass** die Speichenhandhabungsvorrichtung (5), vorzugsweise der Speichengreifer (8), beweglich ist, um die gebogene Speiche (6) zu entspannen und den genannten Endabschnitt (6') der entspannten Speiche (6) in das ausgewählte Speichenloch (9) der Felge (3) und durch dieses hindurch zu bewegen.

9. Speichenpositionierungs- und -platzierungsvorrichtung nach einem der Ansprüche 1 bis 8, **dadurch gekennzeichnet, dass** die Speichenhandhabungsvorrichtung (5) an einem Schlitten (13) angebracht ist, der entlang einer Führung (12) beweglich ist.

10. Speichenpositionierungs- und -platzierungsvorrichtung nach dem Oberbegriff von Anspruch 1 oder nach einem der Ansprüche 1 bis 9, **dadurch gekennzeichnet, dass** die Vorrichtung (1) mindestens einen Schraubendreher (10) umfasst, um einen Nippel (11) auf eine ausgewählte Speiche (6), die in dem ausgewählten Speichenloch (9) der Felge (3) und durch dieses hindurch platziert ist, aufzuschrauben, um die Speiche (6) an der Felge (3) zu befestigen.

11. Speichenpositionierungs- und -platzierungsvorrichtung nach einem der Ansprüche 1 bis 10, **dadurch gekennzeichnet, dass** die Vorrichtung (1) mehrere Speichenhandhabungsvorrichtungen (5) und entsprechend mehrere Schraubendreher (10) zum Platzieren von Nippeln (11) auf Speichen (6) umfasst.

12. Verfahren zur Positionierung und Platzierung einer Speiche (6) oder mehrerer Speichen in Bezug auf eine Felge (3) eines Fahrradrades (4), **gekennzeichnet durch** die folgenden Schritte:
- horizontales Positionieren der Felge (3),
- Angreifen an einer Speiche (6) und Biegen dieser, wobei die Speiche auf einer ersten Seite an einem oberen Flansch (15) oder einem unteren Flansch (16) einer Nabe (4) des Fahrradrades befestigt ist,
- Positionieren der Nabe (4) in einer Höhe, in der sich der obere Flansch (15) der Nabe (4) unterhalb der Felge (3) befindet, falls die Speiche (6) mit dem oberen Flansch (15) der Nabe (4) verbunden ist, oder
- Positionieren der Nabe (4) in einer Höhe, in der sich der obere Flansch (15) der Nabe (4) oberhalb der Felge (3) befindet, falls die Speiche (6) mit dem unteren Flansch (16) der Nabe (4) verbunden ist,
- Positionieren eines Endabschnitts (6') der Speiche (6) gegenüber der ersten Seite der Speiche (6), die an der Nabe (4) des Fahrradrads befestigt ist, vor einem ausgewählten Speichenloch (9) in der Felge (3),
- Entspannen der Speiche (6) und Positionieren des genannten Endabschnitts (6') der Speiche (6) in das ausgewählte Speichenloch (9) der Felge (3) und durch dieses hindurch.

13. Verfahren nach Anspruch 12, **gekennzeichnet durch** Aufschrauben eines Nippels (11) auf die Speiche (6), die in das ausgewählte Speichenloch (9) der Felge (3) hinein und durch dieses hindurch platziert ist.

## Revendications

1. Un appareil (1) de positionnement et de mise en place de rayons, comprenant un dispositif de manipulation de jante (2) pour manipuler une jante (3) d'une roue de bicyclette (4), et un dispositif de manipulation de rayon (5) pour manipuler un rayon (6), lesdits dispositif de manipulation de jante (2) et dispositif de manipulation de rayon (5) étant agencés pour exécuter une opération concertée de positionnement d'un rayon (6) ou de rayons par rapport à la jante (3),
le dispositif de manipulation de rayon (5) étant agencé pour engager et courber un rayon (6) qui est, sur un premier côté, fixé à une flasque supérieure (15) ou à une flasque inférieure (16) d'un moyeu (4) de la roue de bicyclette, puis pour positionner une portion d'extrémité (6') du rayon (6), opposée audit premier côté fixé à la flasque supérieure (15) ou à la flasque inférieure (16) du moyeu, en face d'un trou de rayon (9) sélectionné dans la jante (3), et pour détendre le rayon (6) et positionner ladite portion d'extrémité (6') du rayon (6) dans le trou de rayon (9) sélectionné de la jante (3),
**caractérisé en ce que** l'appareil (1) est agencé pour maintenir la jante (3) dans un plan horizontal, et comprend un support de moyeu (17) mobile verticalement pour supporter le moyeu (4) à une hauteur souhaitée par rapport à la jante (3),
le support de moyeu (17) mobile verticalement étant agencé pour déplacer le moyeu (4) à une hauteur dépendant du fait que le rayon (6) manipulé par le dispositif de manipulation de rayon (5) est connecté à la flasque supérieure (15) ou à la flasque inférieure (16) du moyeu (4).

2. Appareil de positionnement et de mise en place de rayons selon la revendication 1, **caractérisé en ce que** le support de moyeu (17) mobile verticalement est agencé pour maintenir le rayon (6) manipulé par le dispositif de manipulation de rayon (5) et connecté à la flasque supérieure (15) ou à la flasque inférieure (16) du moyeu (4), essentiellement en dessous du plan horizontal passant par la jante (3).

3. Appareil de positionnement et de mise en place de rayons selon l'une quelconque des revendications 1 à 2, **caractérisé en ce que** le support de moyeu (17) mobile verticalement est agencé pour manœuvrer le moyeu (4) à une hauteur dans laquelle la flasque supérieure (15) est située en dessous de la jante (3) lorsque le dispositif de manipulation de rayon (5) manipule un rayon (6) connecté à la flasque supérieure (15) du moyeu (4).

4. Appareil de positionnement et de mise en place de rayons selon l'une quelconque des revendications 1 à 3, **caractérisé en ce que** le support de moyeu (17) mobile verticalement est agencé pour manœuvrer le moyeu (4) à une hauteur dans laquelle la flasque supérieure (15) est située au-dessus de la jante (3) lorsque le dispositif de manipulation de rayon (5) manipule un rayon (6) connecté à la flasque inférieure (16) du moyeu (4).

5. Appareil de positionnement et de mise en place de rayons selon l'une quelconque des revendications 1 à 4, **caractérisé en ce que** le dispositif de manipulation de rayon (5) est équipé d'un capteur (7), ledit dispositif de manipulation de rayon (5) étant en outre équipé d'un dispositif de préhension de rayon (8) pour engager le rayon (6), le dispositif de préhension (8) étant actionné, en utilisation, sur la base de signaux reçus du capteur (7).

6. Appareil de positionnement et de mise en place de rayons selon l'une quelconque des revendications 1 à 5, **caractérisé en ce qu'**au moins une partie du dispositif de manipulation de rayon (5), de préférence le dispositif de préhension (8), est mobile pour courber le rayon (6) saisi par le dispositif de préhension (8).

7. Appareil de positionnement et de mise en place de rayons selon l'une quelconque des revendications 1 à 6, **caractérisé en ce qu'**au moins une partie du dispositif de manipulation de rayon (5), de préférence le dispositif de préhension (8), est mobile pour déplacer une portion d'extrémité (6') d'un rayon (6) courbé en face et dans l'alignement d'un trou de rayon (9) sélectionné de la jante (3).

8. Appareil de positionnement et de mise en place de rayons selon la revendication 7, **caractérisé en ce que** le dispositif de manipulation de rayon (5), de préférence le dispositif de préhension (8), est mobile pour détendre le rayon (6) courbé et déplacer ladite portion d'extrémité (6') du rayon (6) détendu dans et à travers le trou de rayon (9) sélectionné de la jante (3).

9. Appareil de positionnement et de mise en place de rayons selon l'une quelconque des revendications 1 à 8, **caractérisé en ce que** le dispositif de manipulation de rayon (5) est monté sur un chariot (13) mobile le long d'un guide (12).

10. Appareil de positionnement et de mise en place de rayons selon le préambule de la revendication 1 ou selon l'une quelconque des revendications 1 à 9, **caractérisé en ce que** l'appareil (1) comprend au moins un tournevis (10) pour visser un écrou de rayon (11) sur un rayon (6) placé dans et à travers le trou de rayon (9) sélectionné de la jante (3), afin de fixer le rayon (6) à la jante (3).

11. Appareil de positionnement et de mise en place de rayons selon l'une quelconque des revendications 1 à 10, **caractérisé en ce que** l'appareil (1) comprend plusieurs dispositifs de manipulation de rayons (5) et, de manière correspondante, plusieurs tournevis (10) pour la mise en place d'écrous de rayon (11) sur les rayons (6).

12. Procédé de positionnement et de mise en place d'un rayon (6) ou de rayons par rapport à une jante (3) d'une roue de bicyclette (4), **caractérisé par** les étapes consistant à :
- positionner la jante (3) horizontalement,
- engager et courber un rayon (6) qui est, sur un premier côté, fixé à une flasque supérieure (15) ou à une flasque inférieure (16) d'un moyeu (4) de la roue de bicyclette,
- positionner le moyeu (4) à une hauteur dans laquelle la flasque supérieure (15) du moyeu (4) est située en dessous de la jante (3) lorsque le rayon (6) est connecté à la flasque supérieure (15), ou
- positionner le moyeu (4) à une hauteur dans laquelle la flasque supérieure (15) du moyeu (4) est située au-dessus de la jante (3) lorsque le rayon (6) est connecté à la flasque inférieure (16),
- positionner une portion d'extrémité (6') du rayon (6), opposée audit premier côté fixé au moyeu (4), en face d'un trou de rayon (9) sélectionné de la jante (3),
- détendre le rayon (6) et positionner ladite portion d'extrémité (6') du rayon (6) dans et à travers le trou de rayon (9) sélectionné de la jante (3).

13. Procédé selon la revendication 12, **caractérisé par** le fait de visser un écrou de rayon (11) sur le rayon (6) qui est placé dans et à travers le trou de rayon (9) sélectionné de la jante (3).
